# EUROPEAN PATENT SPECIFICATION

(11) **EP 2 245 825 B1**
(45) Date of publication and mention of the grant of the patent: **15.05.2013**
(21) Application number: 08717901.6
(22) Date of filing: 17.03.2008
(51) Int. Cl.: H04L 29/06, G06F 17/24

(54) **METHOD AND DEVICE FOR PROVIDING CONTENT INFORMATION AND SYSTEM COMPRISING SUCH DEVICE**
VERFAHREN UND EINRICHTUNG ZUR BEREITSTELLUNG VON INHALTSINFORMATIONEN UND EINE SOLCHE EINRICHTUNG UMFASSENDES SYSTEM
PROCÉDÉ ET DISPOSITIF DE FOURNITURE D'INFORMATIONS DE CONTENU ET SYSTÈME COMPRENANT UN TEL DISPOSITIF

(30) Priority: 29.01.2008 IN KO01592008
(43) Date of publication of application: 03.11.2010
(73) Proprietor: Nokia Siemens Networks OY, 02610 Espoo (FI)
(72) Inventor: PA, Ramakrishnan, New, Bangalore 560075 (IN); TAMILMANI, Kabilan, Bangalore 560043 (IN); TOVINKERE, Arun, Bangalore 560 040 (IN)
(86) International application number: PCT/EP2008/053165
(87) International publication number: WO 2009/095086

(56) References cited:
- WO-A-00/16221
- US-A1- 2002 099 800
- US-A1- 2005 256 873
- US-B1- 7 096 416

## Description

The invention relates to a method and to a device for providing content information and to a system comprising such a device.

In the publication US 7096416B1 (SMITH TIMOTHY J[US] ET AL), 2 August 2006, a method for synchronizing mixed-media data files is described that comprises receiving a streaming media file, receiving a static media file, producing a streaming output from the streaming media file, querying the streaming output for a time marker upon receiving an input, and associating the static media file with the time marker and the streaming media file in an output file.

The publication US2005/256873 A1 (WALKER GORDON [US] ET AL), 17 November 2005, describes a method provided for inserting content into a content stream for rendering on a device. The method includes obtaining one or more annotation parameters that comprise a content identifier, and determining an insertion point indicator that indicates a location in the content stream.

The publication US2002/0099800 A1 (BRAINARD ROBERT [US] ET AL), 25 July 2002, describes an interactive data identification and recall system which avoids the need to encode additional data into the real-time media broadcast stream/system. In addition, the system can eliminate the need to store the entire show on an end user device, such as an ITV, digital TV, HDTV, smart set-top box or other appliance.

In the publication WO00/16221 A (MICROSOFT CORP [US]), 23 March 2000, a plurality of user-selected annotations are used to define a playlist of media segments corresponding to annotations. The user-selected annotations and their corresponding media segments are then provided to the user in a seamless manner.

When a user is watching a live event, e.g., a football match or a concert in a public place or at home (e.g., via a television), there may be moments of or at the event that are appealing or of particular interest to this user.

If the event is watched live, there is no way to record such moments. Traditionally, the user may record the whole event in parallel and then completely watch it again or s/he may search in the recorded event for interesting moments to remember.

However, this is detrimental as there is no user-related individualization or personalization at all of moments of particular user's interest. The user may not even remember the moments he found most appealing during the live event if s/he has to watch the complete recorded event.

An alternative solution may be for the user taking a personal camera to record the live event. This, however, bears certain limitations: Usually, the quality is low, the user experiences a noisy surrounding and may be distracted from the event as such when having to cope with recording at least portions of the event. Further, cameras may be prohibited for some events.

The **problem** to be solved is to overcome the disadvantages stated above and in particular to provide a personalized service to generate highlighted information.

This problem is solved according to the features of the independent claims. Further embodiments result from the depending claims.

In order to overcome this problem, a method is suggested for providing content information comprising the following steps:
- a signal is conveyed from a device to a network component;
- wherein said signal comprises at least one trigger;
- said network component provides content information based on the at least one trigger.

This allows to efficiently customize a content information that is in particular assembled and/or recorded in a network and the result can be made available to the user in various ways, e.g., via a link to a file to be downloaded or the compiled customized content can be directly sent to the user' device.

This approach applies to all kinds of content, e.g., video, video and audio or audio information only.

Advantageously, the user may collect timestamps or bookmarks that may be used as triggers during the event of interest and s/he may at a predetermined time (after the event or upon user interaction) convey the signal comprising such triggers to the network component for further processing, in particular for compilation of the desired personalized version of particular scenes of interest.

It is to be noted that the network component mentioned can be realized as an functionality within the network that may be at least partially used for processing said signal (and hence the at least one trigger). It is in particular noted that such network component may provide a functionality that is distributed among several components, e.g., servers, databases, etc. of the particular network and it may even be distributed among several networks and/or components beyond the network as such, e.g., within a particular premises of a (content) provider.

Advantageously, the personalized approach provided allows one user to watch a compilation of an event that is totally different from another user's compilation of the same event. For example, a soccer game may comprise a couple of interesting scenes, wherein each spectator can now individually chose which one s/he wants to enjoy again at a later time. The same may apply to a concert regarding video and audio information or to audio information only.

Another advantage is that the user is able to generated a scene to be captured after the actual incidence of interest has occurred. For example, during a live soccer game the approach provided allows the user to decide that s/he wants to capture the last n minutes before a goal together with the goal itself simply by storing the trigger (timestamp, bookmark) together with the information that a time period of n minutes starting p minutes before the trigger and ending q minutes after the trigger (or with the time of the trigger) should be recorded. This is favorable as the user does not have to record all scenes that might lead to a goal in order not to miss an actual goal and its preparation. Instead, the user can relax, watch the game, wait for the goal, then s/he initiates the trigger and is able to watch the whole scene again offline at a later time, e.g. at home.

In an embodiment, said network component provides content information starting at a predetermined period of time prior to said at least one trigger.

In another embodiment, said network component provides content information until said at least one trigger and/or for a predetermined period of time beyond said at least one trigger.

In a further embodiment, said at least one trigger is or comprises a time indicator or a time stamp.

In a next embodiment, said at least one trigger indicates a duration of time.

Hence, a such predefined duration of time may be recorded with or without (a given) offset into the past.

It is also an embodiment that content information comprises audio and/or video information.

Pursuant to another embodiment, the device is a mobile device, in particular a device comprising a mobile radio interface.

Hence, different mobile devices can be used comprising a interface to a mobile network, e.g., a 2G, 2.5G, 3G, WiMAX or WLAN network or combinations thereof.

In addition or as an alternative, the device may comprise and use an interface to a fixed network.

According to an embodiment, said signal comprises several triggers. In particular, said several triggers can be temporarily stored at the device. It is an option that said several triggers are conveyed to the network component via one message.

Hence, the triggers may be collected and conveyed via one signal to the network component.

According to another embodiment, a trigger indicates a start of content information and another trigger indicates an end of content information.

Hence, instead of setting a duration to be recorded dependent on the time of the trigger with or without offset to the past and/or future, it is also possible that the user explicitly conveys two triggers comprising a start and an end time of a scene to be recorded with the network.

In yet another embodiment, said network component is a content server.

According to a next embodiment, the network component initiates recording and/or compilation of content information pursuant to the signal and/or the at least trigger provided.

Pursuant to yet an embodiment, the network component assembles content information based on the at least one trigger. Preferably, the network component may forward the content assembled to the device and/or to another device. As an option, the network component may forward a link for downloading the content assembled to the device and/or to another device.

Such link may be an URL to a download area of the network. Download may preferably processed via a file transfer protocol (FTP).

It is also an embodiment that the network component is configured by the device. The network component may in particular be configured via the Internet.

Hence, advantageously, the functionality and options allowed by the (distributed) network component providing the service of personalized compiled content can be set up and/or configured via the communication network. Hence, parameters, offset times, time windows, downloading or obtaining compiled content, etc. may be set via such means.

As a further embodiment the network component is a distributed component within a communication network.

According to an embodiment, the signal comprises an audio and/or text and/or video information conveyed to the network component.

Hence additional information may be conveyed to the network element, e.g., an audio commentary provided by the user.

It is a further embodiment that the signal comprises at least one parameter as follows:
- a period of time that indicates a duration to be recorded;
- a confirmation;
- a selection information regarding at least one perspective and/or camera;
- a recording mode, in particular a recording speed;
- a picture-in-picture information;
- a location based information.

It is also an embodiment that the approach is used to generate a customized compilation of content information for an event, in particular a live event.

The approach may in particular be used in an IP multimedia subsystem (IMS) network architecture. As an alternative, the approach may utilize an IPTV network architecture.

The problem stated above is also solved by a device comprising a processor unit that is equipped and/or arranged such that the method as described herein is executable on said processor unit.

According to an embodiment, the device is associated with and/or comprises a communication device, in particular a mobile terminal.

The device may be a user equipment (UE) or it may comprise a user equipment functionality.

Hence, the device may be a personal computer or a PDA with an interface to a radio network, e.g., GSM, UMTS, WiMAX and/or WLAN.

The device may also or alternatively have a connection to a fixed network, e.g. a DSL connection to the Internet.

The problem stated supra is further solved by a communication system comprising the device as described herein.

Embodiments of the invention are shown and illustrated in the following figures:
- Fig.1: shows an example of a network arrangement that provides a personalized content based on a user's signal comprising at least one trigger;
- Fig.2: shows a place of interest, e.g. an arena, that is recorded from different perspectives by different cameras;
- Fig.3: shows a timeline and a user trigger after an event;
- Fig.4: shows an architecture of an IPTV based solution;
- Fig.5: shows an architecture of an IMS based solution;
- Fig.6: shows a sequence chart comprising steps as how scenes may be indicated and compiled into a customized video to be provided for a user's offline experience.

Currently, an IPTV solution allows users to record broadcast content to be consumed at a later time. However, users have limited control or customization possibilities over the recorded content. A user may experience the event live and in particular be present at the event venue, where he has limited or no means to record interesting parts for later consumption.

The approach provided herewith proposes a network service through which the user can record and/or tag specific moments of events and/or programs in particular to conveniently experience such events or programs at a later time.

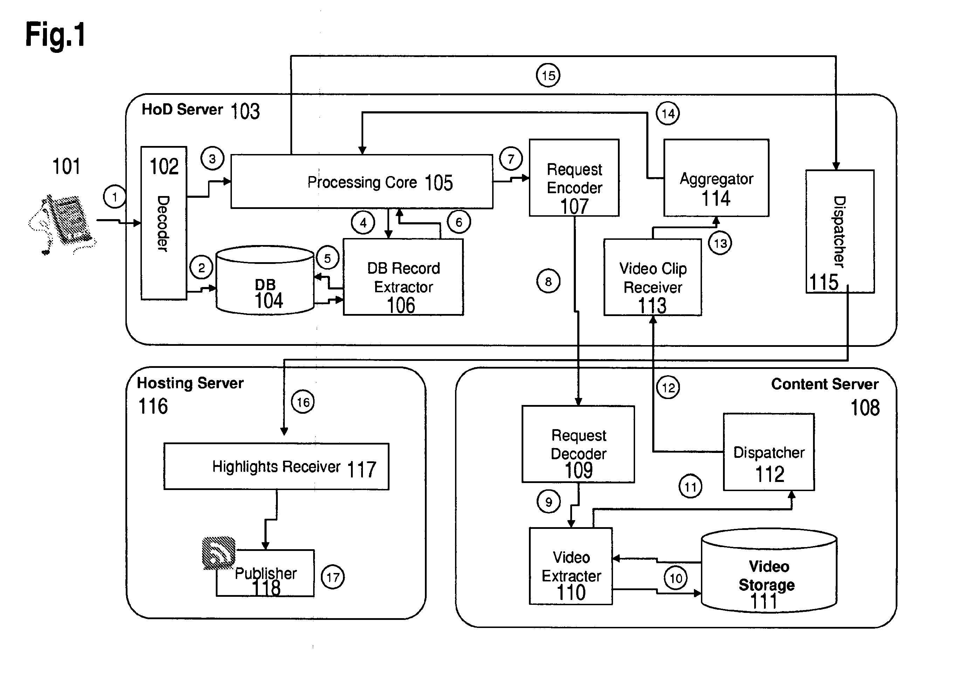

**Fig.1** shows an example of a network arrangement providing such personalized service for a user.
- Step 1:: A signal from a user equipment UE 101 may comprise at least one timestamp or trigger and is conveyed to a decoder 102 of a Highlights-on-Demand (HoD) server 103.
- Step 2:: The signal received from the UE 101 is archived in a database 104.
- Steps 1..2: may be repeated for each signal provided by the UE 101.
- Step 3:: Once the event ends, the UE 101 indicates this to the HoD server 103. A processing core 105 of the HoD server 103 is then informed to initiate a compilation of the highlights.
- Step 4:: The processing core 105 triggers a database record extractor 106 of the HoD server 103 to extract the information stored for this subscriber.
- Step 5:: The database record extractor 106 queries the database 104 and gets the next record for the subscriber.
- Step 6:: A response is relayed back from the database record extractor 106 to the processing core 105.
- Step 7:: The processing core 105 triggers a request encoder 107 of the HoD server 103.
- Step 8:: The request encoder 107 triggers the content server 108, in particular a request decoder 109 of the content server 108.
- Step 9:: A video extractor 110 of the content server 108 is triggered to extract the video portion from a video storage 111 of the content server 108.
- Step 10:: Extraction of the video clip from the video storage 111.
- Step 11:: A dispatcher 112 of the content server 108 is triggered to send the extracted video clip to the HoD server 103.
- Step 12:: The extracted video clip is received by a video clip receiver 113 of the HoD server 103.
- Step 13:: The video clip is then handed over to an aggregator 114 of the HoD server 103.
- Step 14:: The aggregator 114 informs the processing core 105 to start processing the next record.
- Steps 4..14: are repeated for each input received from the UE 101.
- Step 15:: When all records have been processed, the processing core 105 triggers a dispatcher 115 of the HoD server 103 to send the generated highlights to a hosting server 116.
- Step 16:: The generated highlights are received by a highlights receiver 117 of the hosting server 116.
- Step 17:: The highlights are "published" by a publisher 118 of the hosting server 116.

The user requesting such personalized highlights may also want to include his/her own supplementary information, in particular commentary and/or notes into or associated with the compiled highlights. This may be achieved as follows:
(1) Text:
   - Can be sent along with the signal indicating an information to be recorded.
(2) Audio:
   - Audio information can be recorded in particular along or in association with the signal, trigger or timestamp and it may be sent to the service provider or a network component as the HoD server of Fig.1.
   - The user may dial a number and may record his/her comments. This can be achieved as the user can be identified by his/her (calling party) number. The comments may be mixed with a video feed based on the time when it was recorded, or with the video that is close to the time of recording.

The system may also ask the user "do you want to record the last <period of time>" in case there is/was an incidence and/or event of interest, e.g., a goal in a soccer match. "<period of time>" refers to a default period of time to be recorded; it may also indicate a parameter that can be set (e.g., chosen from a set of parameters) by the user upon such request initiated by the system.

The user or subscriber may request a view from a particular perspective or camera so that the event can be viewed differently or better. Further, the user may choose between several options (or combinations thereof): Real motion speed, slow motion speed, both real and slow motion speed, etc.

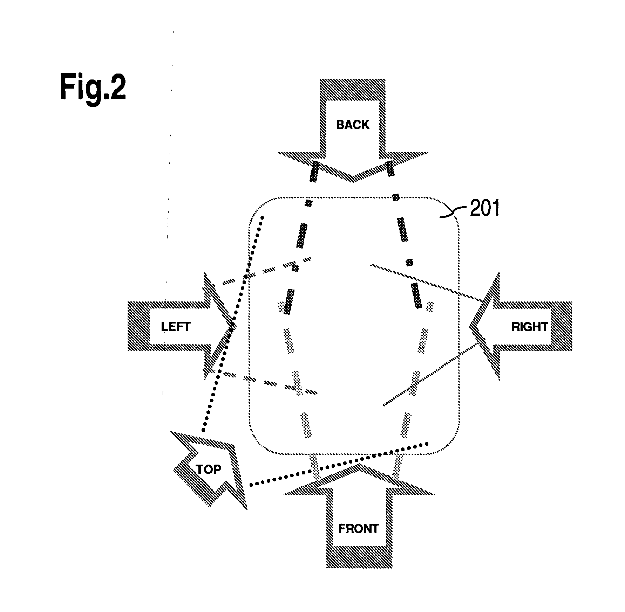

The event for which the highlights are to be generated could be simultaneously captured from many cameras placed at different angles, or to cover different areas. Fig.2 shows a place 201 of an event surrounded by 5 cameras, each having a different angle and/or perspective. Hence, the subscriber should be able to indicate the camera from which the feed is to be taken for generating the highlights.

In addition, it should be possible for a subscriber to also select effects such as slow motion, action replays to be included in the recorded highlights.

Additional possibilities comprise that the user specifies that the highlights recorded should contain feeds from more than one camera simultaneously. An output can then be presented in parallel streams or as a combined picture comprising several different pictures (PIP - picture in picture) each showing a stream from a different camera.

The service suggested can be automatically triggered via an interface to a Location Based System, which, e.g., recognizes that a user has entered a particular venue of the event.

The current location of the subscriber can be obtained from the network or via GPS, and this information can be used to automatically start this application. E.g., if the current location of a subscriber matches the location co-ordinates for a place of an event, the subscriber has arrived at the venue and various actions can be started based on (previously) set subscriber preferences.

It is noted that approach is not limited to videos applications, it may apply for any kind of media (e.g., pure audio).

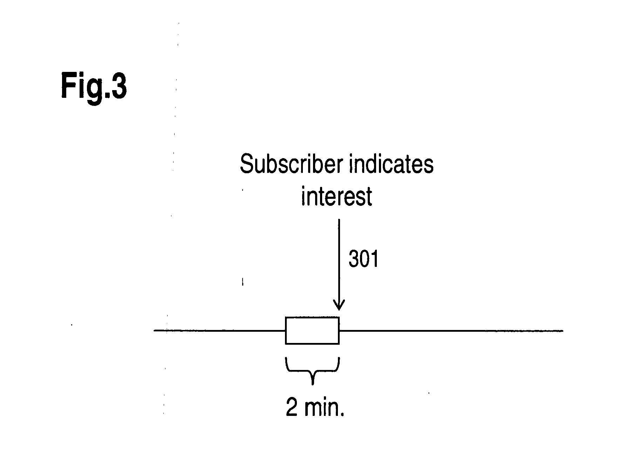

A particular use case can comprise the following steps:
(1) When a person enters an event (the highlights of which s/he wants to capture for later use), s/he may advantageously convey information to the content provider that s/he wants customized highlights.
(2) The user's request is acknowledged by the content provider thereby synchronizing the time at the content provider's server and the UE of the subscriber.
(3) During the course of the event, the subscriber triggers several scenes to be captured. S/He "bookmarks" a scene of particular interest for later viewing. As an example shown in **Fig.3****,** the system can be configured to capture two minutes prior to a user's trigger 301.
(4) In a similar manner, the user triggers several scenes to be captured during the event. At the end of the event (or whenever the subscriber wishes to end the session), the subscriber indicates this to the content provider. The content provider aggregates all such triggers and assembles a single highlight file and sends to the subscriber. Instead, the subscriber may send a link to the subscriber for (later) download purposes.
(5) A subscriber consuming the event over IPTV, also can list his current "Bookmarks" and select a particular item and view it by selectively accessing the time code bookmarked.

The mobile network operators or service providers may offer the solution described herein to offer value added services.

During a phone call, one may want to indicate that at least a portion of the call shall be recorded and forwarded to this user. For example, when somebody gives a phone number, the user does not need to rush finding a pen and paper to note it down. Instead, the user may indicate to the operator that this needs to be recorded and then sent at the end of the call. Hence, upon indication of the subscriber, a call may be recorded (for a given period of time).

### Network Architecture: IPTV based solution (non-IMS based)

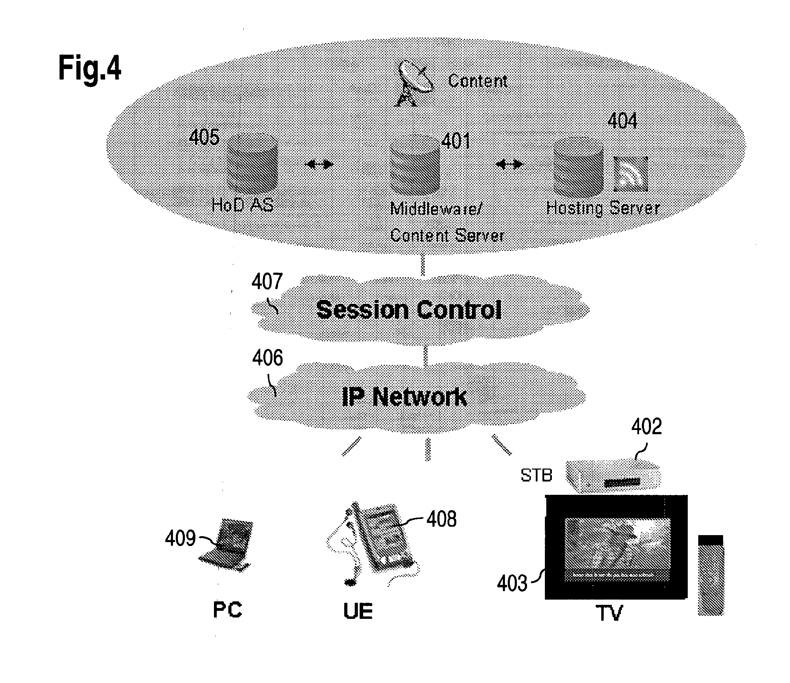

**Fig.4** shows an architecture of an IPTV based solution for the approach described herein.

An IPTV service delivery may be orchestrated by a "Middleware" server 401 (which in this example comprises a content server or video-on-demand (VoD) server) which coordinates all entities of the solution like a Broadcast Headend, a Video-on-Demand, digital rights management (DRM), etc.

The IPTV service may particularly provide a "Network Personal Video Recorder (PVR)" where a user can record broadcast content in a storage hosted in the network and watch the recorded program at a later time.

The user interactions for recording and/or consuming are provided via an IPTV client that is, e.g., located in or associated with a set-top-box 402 connected to a user's TV 403. The set-top-box 402 is connected via an IP network 406 and further via a session control layer 407 to the middleware/content server 401.

Instead of the set-top-box 402 other devices may be utilized to provide a signal and/or trigger to the middleware/content server 401, e.g., a mobile terminal UE 408 or a personal computer 409. Each device may be connected to the IP network 406 in various ways, e.g., via a fixed line or via a wireless connection.

When a user selects an event for recording, the request is sent from the set-top-box 402 to the IPTV middleware 401 which instructs the VoD server to start the recording (synchronized to the event's schedule). This facility may be available for recording entire programs and/or episodes.

In addition, the IPTV middleware 401 controls a Highlights-on-Demand (HoD) server 405. While the user is watching an event, s/he can request for recording a segment of the program through a user interface provided by the set-top-box 402. The user request is sent to IPTV middleware 401 which forwards the request to HoD server 405. Such request may comprise at least one signal comprising information regarding the channel, a duration to be recorded, a user name, a user comment (audio comment or text), a perspective information (e.g., which camera to be selected), a picture-in-picture information (e.g., which view or camera perspectives to be combined), etc.

The HoD server 405 analyzes the request and informs the VoD server to start recording of a scene selected and to add metadata to the recording, if necessary or applicable.

When the event ends (or as indicated by the user), the HoD server 405 collects the individual recorded clips in the VoD server, preferably combines them into a continuous video content or stream and stores it at a hosting server 404. In addition, said metadata as well as the content is provided and/or made available to the user, e.g., by sending a link (URL) or by ftp download.

### Network Architecture: IMS based solution

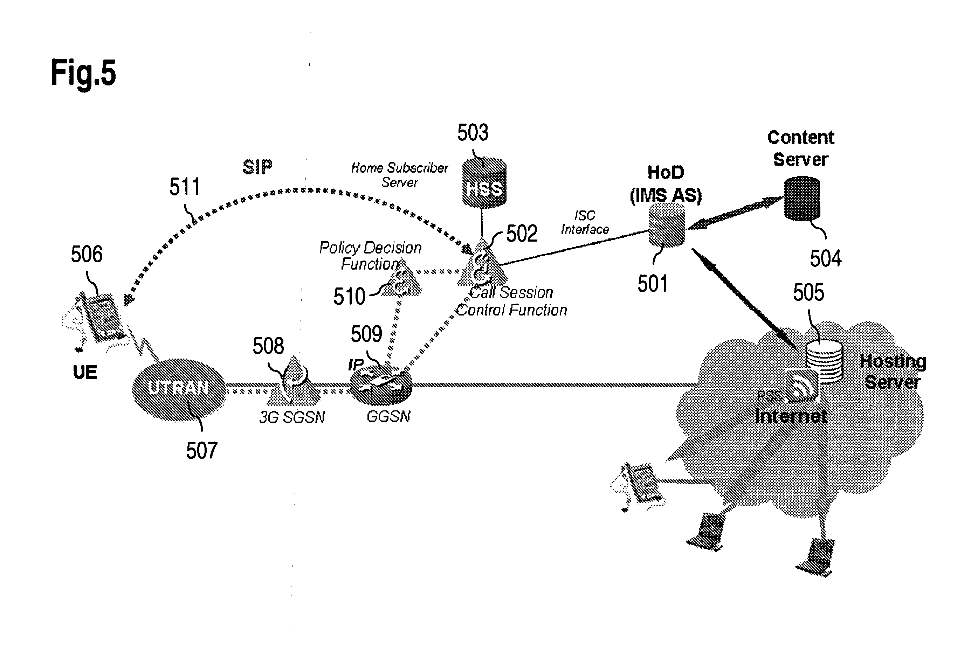

**Fig.5** shows an architecture of an IMS based solution for the approach described herein.

Here, a HoD server is realized as an IMS application server (AS) 501. The IMS AS 501 interfaces with a Call Session Control Function (CSCF) 502 via an IMS Service Control (ISC) interface, which is based on the SIP protocol.

The CSCF 502 is responsible for session control in the IMS network. The IMS AS 501 can optionally interface with the Home Subscriber Server (HSS) 503 via a DIAMETER based interface known as Sh. The HSS 503 is the central repository for all subscriber related data in the IMS network.

The video(s) from which the highlights are to be generated are stored on a content server 504 that may in particular be maintained by the content owner.

The HoD server 501 provides details about the portion of the video(s) required for generating the highlights, and the content server 504 provides the requested portions of the video(s).

Once the highlights have been generated (aggregating the individual video clips received from the content server 504), the HoD Server 501 conveys them to a hosting server 505, which hosts the highlights or scenes according as selected by the respective user.

The hosting server 505 can incorporate standard Web 2.0 features such as RSS/ATOM feeds to inform registered users about the availability of new highlights for viewing and/or downloading.

A mobile terminal UE 506 is connected via an UTRAN 507 to a 3G Serving GPRS Support Node (SGSN) 508, which is connected to the CSCF 502 via a Gateway GPRS Support Node (GGSN) 509. Furthermore, a policy decision function 510 is connected to the GGSN 509 and to the CSCF 502.

The mobile terminal UE 506 is connected via the SIP protocol to the CSCF 502 and may hence provide signals as described to select scenes of particular interest that shall be recorded and provided by the network.

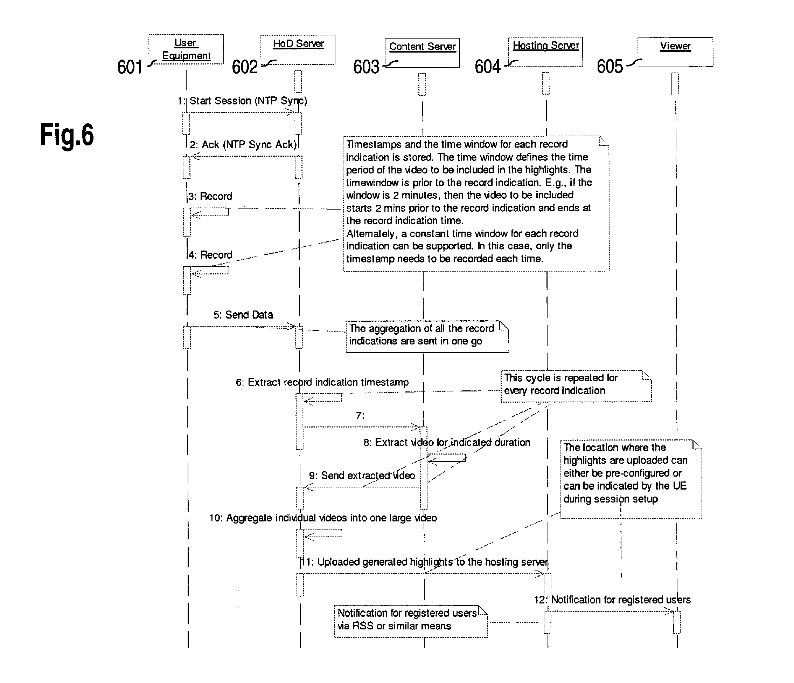

An exemplary sequence chart for such a scenario is depicted in **Fig.6****.**

A user equipment UE 601 sends in a step 1 a "Start Session" message to a HoD Server 602, said message comprising an NTP Sync (network time protocol synchronization).

The HoD Server 602 sends in a step 2 an acknowledge (ACK) message comprising an NTP Sync Ack back to the UE 601.

As indicated in steps 3 and 4, the UE 601 locally stores timestamps and time window information for each scene that he wants to be recorded. The UE 601 may in particular store trigger information that is connected with a duration (at least partially to the past and/or to the future) or each trigger information may identify either start or stop of a scene to be recorded.

The time window to be recorded may preferably extend to the past of an actual trigger. For example, if a duration for the time window to be recorded is set to two minutes, the video to be recorded may start two minutes prior to the trigger and end at the time the trigger was set. Of course, the duration and the start and/or end of the recorded scene may vary in relation to said trigger.

In a step 5 the aggregated information is sent as at least one signal from the UE 601 to the HoD Server 602. Preferably, such information can be sent in one message.

For each scene to be recorded, the HoD Server 602 extracts (step 6) the trigger or timestamp or indication conveyed in the signal and provides (step 7) it to a content server 603. The content server 603 extracts (step 8) the video for the duration indicated or configured for each scene and sends (step 9) the extracted video to the HoD server 602.

The HoD server 602 compiles an aggregated video (step 10) from the scenes it obtained from the content server 603.

In a step 11, the HoD server 602 uploads the compiled video comprising the highlighted scenes to a hosting server 604.

The location to which such video is uploaded or stored may be set up in advance by the user.

The hosting server 604 notifies (e.g., via URL, RSS or the like) a viewer 605, i.e. a registered user, that the video is compiled and that it can be downloaded (step 12) and/or watched as a streaming video. In addition or as an alternative, the hosting server 604 may send the video to the viewer 605.

### Abbreviations:

| | |
|---|---|
| CSCF | Call Session Control Function |
| DRM | Digital Rights Management |
| GGSN | Gateway GPRS Support Node |
| GPRS | General Packet Radio Service |
| HoD | Highlights on Demand |
| IMS | IP Multimedia Subsystem |
| IPTV | IP Television |
| MNO | Mobile Network Operator |
| NTP | Network Time Protocol |
| PVR | Personal Video Recorder |
| SGSN | Serving GPRS Support Node |
| SIP | Session Initiation Protocol |
| SP | Service Provider |
| UE | User Equipment |
| UMTS | Universal Mobile Telecommunications System |
| UTRAN | UMTS Terrestrial Radio Access Network |

## Claims

1. A method for providing content information comprising the following steps:
- a signal is conveyed from a device (101) to a network component (103);
- wherein said signal comprises at least one trigger and said signal comprises a selection information regarding at least one perspective and/or camera;
- said network component (103) provides the content information based on the at least one trigger;
- said network component further generates a customized compilation of the content information for an event, for which highlights are to be generated from the at least one perspective and/or camera,
- wherein said event is simultaneously captured from a plurality of cameras placed at different angles or to cover different areas.

2. The method according to claim 1, wherein said network component (103) provides content information starting at a predetermined period of time prior to said at least one trigger.

3. The method according to any of the preceding claims, wherein said network component (103) provides content information until said at least one trigger and/or for a predetermined period of time beyond said at least one trigger.

4. The method according to any of the preceding claims, wherein said at least one trigger indicates a duration of time.

5. The method according to any of the preceding claims, wherein said signal comprises several triggers.

6. The method according to any of the preceding claims, wherein a trigger indicates a start of content information and another trigger indicates an end of content information.

7. The method according to any of the preceding claims, wherein the network component (103) initiates recording and/or compilation of content information pursuant to the signal and/or the at least trigger provided.

8. The method according to any of the preceding claims, wherein the network component (103) assembles content information based on the at least one trigger.

9. The method according to claim 8, wherein the network component (103) forwards the content assembled to the device (101) and/or to another device (116).

10. The method according to any of the claims 8 or 9, wherein the network component (103) forwards a link for downloading the content assembled to the device (101) and/or to another device.

11. The method according to any of the preceding claims, wherein the network component (103) is configured by the device (101).

12. The method according to any of the preceding claims, wherein the network component (103) is configured via the Internet.

13. The method according to any of the preceding claims, wherein the signal comprises an audio and/or text and/or video information conveyed to the network component (103).

14. The method according to any of the preceding claims, wherein the signal comprises at least one parameter as follows:
- a period of time that indicates a duration to be recorded;
- a confirmation;
- a recording mode, in particular a recording speed;
- a picture-in-picture information;
- a location based information.

15. The method according to any of the preceding claims used to generate a customized compilation of content information for a live event.

16. The method according to any of the preceding claims utilizing an IP multimedia subsystem network architecture.

17. The method according to any of claims 1 to 15, utilizing an IPTV network architecture.

18. A device comprising a processor unit that is arranged to implement the method according of any of the preceding claims.

19. The device according to claim 18, wherein said device is associated with and/or comprises a communication device, in particular a mobile terminal, and wherein said device is a user equipment (101) or comprises a user equipment functionality.

20. Communication system comprising the device according to any of claims 18 or 19.

## Patentansprüche

1. Verfahren zum Bereitstellen von Inhaltsinformationen, das die folgenden Schritte umfasst:
- ein Signal wird von einer Vorrichtung (101) zu einer Netzkomponente (103) geleitet;
- wobei das Signal wenigstens einen Trigger umfasst und das Signal eine Auswahlinformation umfasst, die wenigstens eine Perspektive und/oder Kamera betrifft;
- die Netzkomponente (103) stellt basierend auf dem wenigstens einen Trigger die Inhaltsinformationen bereit;
- die Netzkomponente erzeugt ferner eine kundenspezifische Zusammenstellung der Inhaltsinformationen für ein Ereignis, für das Hervorhebungen aus der wenigstens einen Perspektive und/oder Kamera erzeugt werden müssen,
- wobei das Ereignis gleichzeitig von mehreren Kameras, die unter mehreren Winkeln oder zum Abdecken unterschiedlicher Bereiche angeordnet sind, erfasst wird.

2. Verfahren nach Anspruch 1, wobei die Netzkomponente (103) Inhaltsinformationen beginnend bei einer vorgegebenen Zeitspanne vor dem wenigstens einen Trigger bereitstellt.

3. Verfahren nach einem der vorhergehenden Ansprüche, wobei die Netzkomponente (103) Inhaltsinformationen bis zu dem wenigstens einen Trigger und/oder für eine vorgegebene Zeitspanne jenseits des wenigstens einen Triggers bereitstellt.

4. Verfahren nach einem der vorhergehenden Ansprüche, wobei der wenigstens eine Trigger eine Zeitdauer angibt.

5. Verfahren nach einem der vorhergehenden Ansprüche, wobei das Signal mehrere Trigger umfasst.

6. Verfahren nach einem der vorhergehenden Ansprüche, wobei ein Trigger einen Beginn der Inhaltsinformationen angibt und ein weiterer Trigger ein Ende der Inhaltsinformationen angibt.

7. Verfahren nach einem der vorhergehenden Ansprüche, wobei die Netzkomponente (103) das Aufzeichnen und/oder Zusammenstellen von Inhaltsinformationen gemäß dem Signal und/oder dem wenigstens einen zur Verfügung gestellten Trigger initiiert.

8. Verfahren nach einem der vorhergehenden Ansprüche, wobei die Netzkomponente (103) Inhaltsinformationen basierend auf dem wenigstens einen Trigger zusammensetzt.

9. Verfahren nach Anspruch 8, wobei die Netzkomponente (103) den zusammengesetzten Inhalt zu der Vorrichtung (101) und/oder einer weiteren Vorrichtung (116) weiterleitet.

10. Verfahren nach einem der Ansprüche 8 oder 9, wobei die Netzkomponente (103) einen Link zum Herunterladen des zusammengesetzten Inhalts zu der Vorrichtung (101) und/oder zu einer weiteren Vorrichtung weiterleitet.

11. Verfahren nach einem der vorhergehenden Ansprüche, wobei die Netzkomponente (103) von der Vorrichtung (101) konfiguriert wird.

12. Verfahren nach einem der vorhergehenden Ansprüche, wobei die Netzkomponente (103) über das Internet konfiguriert wird.

13. Verfahren nach einem der vorhergehenden Ansprüche, wobei das Signal Audio- und/oder Text- und/oder Videoinformationen umfasst, die zu der Netzkomponente (103) geleitet werden.

14. Verfahren nach einem der vorhergehenden Ansprüche, wobei das Signal wenigstens einen Parameter wie folgt umfasst:
- eine Zeitspanne, die eine Dauer angibt, für die aufgezeichnet werden soll;
- eine Bestätigung;
- einen Aufzeichnungsmodus, insbesondere eine Aufzeichnungsgeschwindigkeit;
- eine Bild-in-Bild-Information;
- eine ortsbasierte Information.

15. Verfahren nach einem der vorhergehenden Ansprüche, das verwendet wird, um eine kundenspezifische Zusammenstellung von Inhaltsinformationen für ein Live-Ereignis zu erzeugen.

16. Verfahren nach einem der vorhergehenden Ansprüche, das eine IP-Multimediasubsystem-Netzarchitektur verwendet.

17. Verfahren nach einem der Ansprüche 1 bis 15, das eine IPTV-Netzarchitektur verwendet.

18. Vorrichtung, die eine Prozessoreinheit umfasst, die ausgelegt ist, das Verfahren nach einem der vorhergehenden Ansprüche zu implementieren.

19. Vorrichtung nach Anspruch 18, wobei die Vorrichtung einer Kommunikationsvorrichtung, insbesondere einem mobilen Endgerät, zugeordnet ist und/oder eine Kommunikationsvorrichtung, insbesondere ein mobiles Endgerät, umfasst und wobei die Vorrichtung eine Anwendervorrichtung (101) ist oder eine Anwendervorrichtungsfunktionalität umfasst.

20. Kommunikationssystem, das die Vorrichtung nach einem der Ansprüche 18 oder 19 umfasst.

## Revendications

1. Un procédé de fourniture d'informations de contenu comprenant les étapes suivantes:
- un signal est acheminé à partir d'un dispositif (101) vers un composant de réseau (103),
- dans lequel ledit signal comprend au moins un déclencheur et ledit signal comprend une information de sélection concernant au moins une perspective et/ou une caméra,
- ledit composant de réseau (103) fournit les informations de contenu en fonction du au moins un déclencheur,
- ledit composant de réseau génère en outre une compilation personnalisée des informations de contenu pour un événement, pour lequel des surbrillances doivent être générées à partir de la au moins une perspective et/ou caméra,
- dans lequel ledit événement est capturé simultanément à partir d'une pluralité de caméras placées à différents angles ou de façon à couvrir différentes zones.

2. Le procédé selon la revendication 1, dans lequel ledit composant de réseau (103) fournit des informations de contenu en commençant à partir d'une période de temps prédéterminée avant ledit au moins un déclencheur.

3. Le procédé selon l'une quelconque des revendications précédentes, dans lequel ledit composant de réseau (103) fournit des informations de contenu jusqu'au moins un déclencheur et/ou pendant une période de temps prédéterminée au-delà dudit au moins un déclencheur.

4. Le procédé selon l'une quelconque des revendications précédentes, dans lequel ledit au moins un déclencheur indique une durée.

5. Le procédé selon l'une quelconque des revendications précédentes, dans lequel ledit signal comprend plusieurs déclencheurs.

6. Le procédé selon l'une quelconque des revendications précédentes, dans lequel un déclencheur indique un début d'informations de contenu et un autre déclencheur indique une fin d'informations de contenu.

7. Le procédé selon l'une quelconque des revendications précédentes, dans lequel le composant de réseau (103) lance l'enregistrement et/ou la compilation d'informations de contenu conformément au signal et/ou au au moins un déclencheur fournis.

8. Le procédé selon l'une quelconque des revendications précédentes, dans lequel le composant de réseau (103) assemble des informations de contenu en fonction du au moins un déclencheur.

9. Le procédé selon la revendication 8, dans lequel le composant de réseau (103) transmet le contenu assemblé au dispositif (101) et/ou à un autre dispositif (116).

10. Le procédé selon l'une quelconque des revendications 8 ou 9, dans lequel le composant de réseau (103) transmet un lien de téléchargement du contenu assemblé au dispositif (101) et/ou à un autre dispositif.

11. Le procédé selon l'une quelconque des revendications précédentes, dans lequel le composant de réseau (103) est configuré par le dispositif (101).

12. Le procédé selon l'une quelconque des revendications précédentes, dans lequel le composant de réseau (103) est configuré par l'intermédiaire de l'Internet.

13. Le procédé selon l'une quelconque des revendications précédentes, dans lequel le signal comprend une information audio et/ou textuelle et/ou vidéo acheminée au composant de réseau (103).

14. Le procédé selon l'une quelconque des revendications précédentes, dans lequel le signal comprend au moins un paramètre parmi:
- une période de temps qui indique une durée d'enregistrement,
- une confirmation,
- un mode d'enregistrement, plus particulièrement une vitesse d'enregistrement,
- des informations image-en-image,
- des informations basées sur l'emplacement.

15. Le procédé selon l'une quelconque des revendications précédentes utilisé de façon à générer une compilation personnalisée d'informations de contenu pour un événement en direct.

16. Le procédé selon l'une quelconque des revendications précédentes utilisant une architecture de réseau de sous-système multimédia IP.

17. Le procédé selon l'une quelconque des revendications 1 à 15, utilisant une architecture de réseau IPTV.

18. Un dispositif comprenant une unité de traitement qui est agencée de façon à mettre en oeuvre le procédé selon l'une quelconque des revendications précédentes.

19. Le dispositif selon la revendication 18, dans lequel ledit dispositif est associé à et/ou comprend un dispositif de communication, plus particulièrement un terminal mobile, et dans lequel ledit dispositif est un équipement d'utilisateur (101) ou comprend une fonctionnalité d'équipement d'utilisateur.

20. Un système de communication comprenant le dispositif selon l'une quelconque des revendications 18 ou 19.
